# EUROPÄISCHE PATENTSCHRIFT

(11) **EP 0 984 879 B1**
(45) Veröffentlichungstag und Bekanntmachung des Hinweises auf die Patenterteilung: **08.09.2004**
(21) Anmeldenummer: 98932108.8
(22) Anmeldetag: 03.06.1998
(51) Int. Cl.: B60T 11/26, B60T 17/22

(54) **AUSGLEICHSBEHÄLTER MIT WARNEINRICHTUNG**
COMPENSATING TANK WITH WARNING DEVICE
RESERVOIR DE COMPENSATION A DISPOSITIF AVERTISSEUR

(30) Priorität: 06.06.1997 DE 19723946
(43) Veröffentlichungstag der Anmeldung: 15.03.2000
(73) Patentinhaber: Continental Teves AG & Co. oHG, 60488 Frankfurt (DE)
(72) Erfinder: MAY, Gabriele, D-63069 Offenbach (DE); KREBS, Werner, D-65582 Hambach (DE); TANDLER, Peter, D-61479 Kronberg (DE); WECKERLE, Michael, D-61206 Wöllstadt (DE)
(86) Internationale Anmeldenummer: PCT/EP1998/003296
(87) Internationale Veröffentlichungsnummer: WO 1998/055349

(56) Entgegenhaltungen:
- EP-A- 0 483 680
- DE-A- 3 711 369
- US-A- 3 727 182
- US-A- 4 638 288

## Beschreibung

Die Erfindung betrifft einen Ausgleichbehälter für eine hydraulische Bremsanlage, gemäß dem Oberbegriff von Anspruch 1.

Ein derartiger Ausgleichsbehälter wird in der EP 483 680 A2 erwähnt, wobei neben der Behälterwarneinrichtung ferner noch ein Querbeschleunigungssensor vorgesehen ist, und diese Bauteile mit einem Schaltkreis verbunden sind. Gemäß einer implementierten Logik erfolgt eine Abfrage, ob gleichzeitig eine Querbeschleunigung sowie ein niedriger Behälterfüllstand gemeldet werden. Für diesen Fall werden Teilfunktionen des Bremssystems temporär abgeschaltet.

Ferner ist aus der DE 37 11 369 A1 ein Ausgleichs- oder Nachlaufbehälter für eine hydraulische Bremsanlage bekannt, der an einem Tandemhauptzylinder angeordnet ist, welcher die Bremsanlage mit Bremsflüssigkeit versorgt. Der Ausgleichsbehälter weist eine Verschraubung sowie eine Behälterwarneinrichtung auf, die beispielsweise aus einem rohrförmigen Gehäuse und einem daran verschiebbaren Schwimmer besteht. Sinkt der Bremsflüssigkeitspegel unter ein bestimmtes Niveau, so sinkt ebenfalls der Schwimmer, und es wird über Kontakte eine Bremsflüssigskeitswarnlampe betätigt, die den Fahrer eines Kraftfahrzeuges über den zu niedrigen Bremsflüssigkeitsstand warnt.

Insbesondere bei Fahrbahnsteigungen, Kurvenfahrten und Brems- bzw. Beschleunigungsvorgängen des Kraftfahrzeuges kann es zu einem kurzfristigen lokalen Absinken des Flüssigkeitspegels und einem daraus resultierenden Aufflackern der Warnlampe für die Bremsflüssigkeit kommen.

Aus diesem Grunde sind mechanische Lösungen dieses Problems erstellt worden, bei denen beispielsweise der Nachlaufbehälter in mehrere miteinander kommunizierende Kammern unterteilt worden ist, die für eine gleichmäßige Verteilung der Bremsflüssigkeit im Behälter sorgen sollen. Ebenfalls gibt es Lösungen mit mehreren Schwimmern, wodurch der Flüssigkeitsstand an mehren Stellen im Behälter abgefragt werden kann. All diese mechanischen Lösungen bedingen einen hohen Aufwand an Versuchs- und möglichen Umkonstruktionskosten, um den Ausgleichsbehälter an den jeweiligen Fahrzeugtyp bzw. an dessen unterschiedliche Anordnung im Motorraum anzupassen.

Als Alternative zu schwimmerbetätigten Warneinrichtungen sind auch Warneinrichtungen bekannt, die mittels Radar, Sensoren oder dergleichen den Flüssigkeitspegel der Bremsflüssigkeit im Behälter abtasten. Bei diesen elektronischen Warneinrichtungen tritt das obengenannte Problem des kurzfristigen lokalen Absinkens des Flüssigkeitspegels und ein daraus resultierendes Aufflackern der Warnlampe jedoch ebenso wie bei den mechanischen Warneinrichtungen auf.

Es ist daher Aufgabe der vorliegenden Erfindung, einen Ausgleichsbehälter dahingehend zu verbessern, daß ein kurzzeitiges Aufflackern einer Bremsflüssigkeitswarnlampe einfach und kostengünstig vermieden werden kann.

Diese Aufgabe wird erfindungsgemäß dadurch gelöst, daß das Zeitglied unmittelbar an einem Bauteil des Ausgleichsbehälters oder mittelbar an einem Bauteil des Ausgleichsbehälters mittels einem Steckerteil oder Adapter angeordnet ist. Vorteilhaft ist dabei insbesondere die Anordnung in einem Stekkerteil, also in der Nähe der elektrischen Verbindung vom Nachlaufbehälter zu einer Warnlampe. Alternativ dazu besteht auch die Möglichkeit, das Zeitglied an bzw. in einem separatem Bauteil unterzubringen. Gemäß einer besonders bevorzugten Ausführungsform ist es dann möglich, das Zeitglied in einem Adapter auszubilden, der mit dem Steckerteil verbunden werden kann. Auf diese Weise ist es sehr einfach möglich, bereits bestehende Warneinrichtungen mit einem Zeitglied nachzurüsten. Desweiteren können so Zeitglieder mit unterschiedlichen Ansprechzeiten auf einfache Weise dem jeweiligen Einsatzfall angepaßt bzw. sogar mehrere Zeitglieder miteinander kombiniert werden.

Eine vorteilhafte Ausführungsform des Erfindungsgegenstandes besteht darin, daß das Zeitglied im Ausgleichsbehälter selbst integriert angeordnet ist. Damit wird eine Unabhängigkeit der Warneinrichtung von unterschiedlichen Bordcomputern etc. erreicht.

In vorteilhafter Weise ist das Zeitglied ferner in einer Verschraubung bzw. dem Deckel des Ausgleichsbehälters anordbar, in dem sich üblicherweise auch die übrigen Bauteile der Behälterwarneinrichtung befinden bzw. damit verbunden sind.

Bevorzugt weist das erfindungsgemäße Zeitglied eine Ansprechzeit von ungefähr 5 bis 20 Sekunden auf. Damit ist einerseits gewährleistet, daß Zustände, bei denen das Flüssigkeitsniveau nur kurzfristig absinkt, nicht registriert werden. Andererseits kann ein Ausfall der Bremsanlage aufgrund fehlender Flüssigkeit rechtzeitig gemeldet werden.

Das erfindungsgemäße Zeitglied umfaßt vorzugsweise zumindest ein RC-Glied sowie einen Schmitt-Trigger-Komparator. Mittels dieser einfachen elektronischen Bauteile kann das Zeitglied kostengünstig hergestellt werden.

Weitere Merkmale und Vorteile der Erfindung ergeben sich aus der folgenden Beschreibung eines bevorzugten Ausführungsbeispieles unter Bezugnahme auf die Zeichnungen. Es zeigen:
- Fig. 1: eine teilweise geschnittene Ansicht einer Behälterverschraubung mit einer daran angeordneten Warneinrichtung und
- Fig. 2: einen beispielhaften Schaltplan eines erfindungsgemäßen Zeitgliedes.

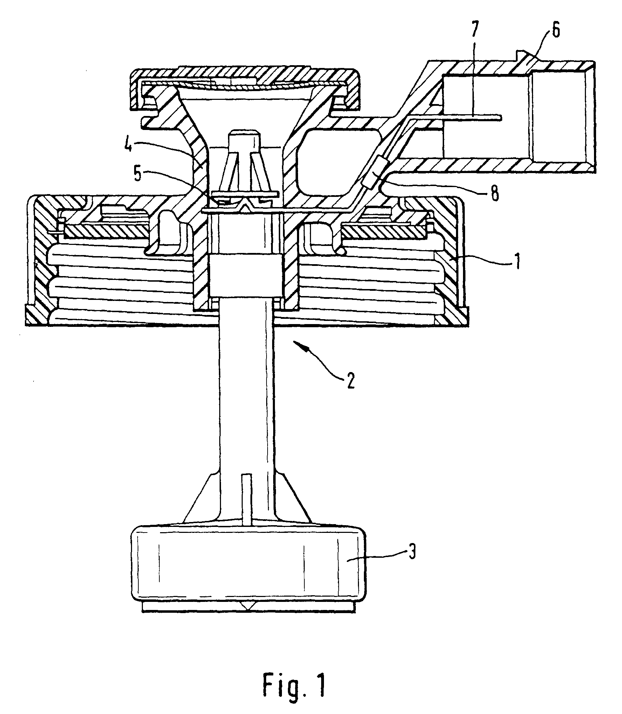

In Fig. 1 ist eine Verschraubung bzw. ein Deckel 1 eines nicht vollständig dargestellten Ausgleichsbehälters gezeigt. Die Verschraubung 1 umfaßt eine Behälterwarneinrichtung 2, die im wesentlichen durch einen Schwimmer 3 ausgelöst wird der sich mit der Oberfläche einer nicht dargestellten Bremsflüssigkeit auf- und abbewegt und so das Vorliegen von zu wenig Bremsflüssigkeit im Ausgleichsbehälter meldet.

Der Schwimmer 3 ist in einem rohrförmigen Gehäuse 4 verschieblich geführt, das entweder einstückig mit dem Deckel 1 ausgebildet oder auf andere Art und Weise mit diesem verbunden ist. Sinkt beispielsweise der Schwimmer 3 nach unten, so werden Kontakte 5 und somit ein Schaltkreis geschlossen, was zu einem Aufleuchten einer nicht dargestellen Bremsflüssigkeitswarnlampe führt, die mit der Warneinrichtung 2 über in einem Steckerteil 6 angeordnete Kontaktstifte 7 verbunden ist.

Bei Brems- bzw. Beschleunigungsvorgängen und insbesondere bei Kurvenfahrten kann es kurzfristigt zu einem Aufleuchten der Warnlampe kommen, da hierbei der Bremsflüssigkeitspegel schwankt bzw., bedingt durch Fliehkräfte, die Bremsflüssigkeit unregelmäßig im Behälter verteilt wird.

Um dies zu vermeiden, ist im vorliegenden Ausführungsbeispiel in bzw. an der Behälterwarneinrichtung 2 ein erfin dungsgemäßes Zeitglied 8 angeordnet. Mittels des vorzugsweise elektronisch ausgeführten Zeitgliedes 8 ist es möglich, daß ein kurzfristiges Aufleuchten der Warnlampe unterdrückt wird.

Erfindungsgemäß ist das Zeitglied 8 im Behälter integriert. Dadurch wird eine Abhängigkeit, beispielsweise von unterschiedlichen Bordcomputern von verschiedenen Fahrzeugtypen vermieden. Bevorzugt ist das Zeitglied 8 in der Verschraubung 1 des Behälters, also in der Nähe der Kontakte 5 bzw. der Kontaktstifte 7 der Behälterwarneinrichtung 2 angeordnet. Dabei kann das Zeitglied 8 auch im Steckerteil 7 der Verschraubung 1 ausgebildet sein.

Gemäß einer nicht dargestellten alternativen Ausführungsform der vorliegenden Erfindung kann das Zeitglied 8 auch an bzw. in einem nicht gezeigten separatem Bauteil untergebracht sein. In einer besonders vorteilhaften Weiterbildung dieser Ausführungsform ist es dann möglich, das Zeitglied 8 in einem Adapter auszubilden, der mit dem Steckerteil 6 verbunden werden kann. Auf diese Weise ist es sehr einfach und kostengünstig denkbar, bereits bestehende Warneinrichtungen mit einem Zeitglied 8 nachzurüsten. Desweiteren können so Zeitglieder 8 mit unterschiedlichen Ansprechzeiten auf einfache Weise an den jeweiligen Einsatzfall angepaßt bzw. sogar mehrere Zeitglieder 8 miteinander kombiniert werden.

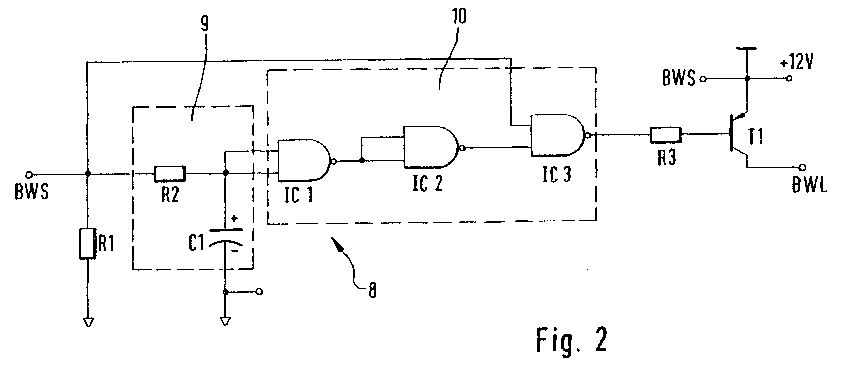

Fig. 2 zeigt am Beispiel einer elektronischen Schaltung der möglichen Aufbau eines erfindungsgemäßen Zeitgliedes 8. Natürlich sind auch hierzu alternative Realisierungsformen eines Zeitgliedes 8 denkbar. Das beispielhaft dargestellte Zeitglied 8 umfaßt im wesentlichen die Widerstände R1 bis R3, den Kondensator C1, den Transistor T1 und die integrierten Schaltkreise IC 1 bis IC 3, also einfach und kostengünstig herzustellende Bauteile.

Liegt an der nicht näher bezeichneten Leitung die Spannung BWS einer Behälterwarneinrichtung an, so wird über den Widerstand R2 der Kondensator C1 aufgeladen. Nach einer bestimmten Zeit, die von dem aus dem Widerstand R2 und dem Kondensator C1 gebildeten RC-Glied 9 abhängt, wird der Kondensator C1 aufgeladen und liefert seinerseits eine Spannung. Diese Spannung wird mittels eines hier beispielhaft durch die integrierten Schaltkreise IC 1 bis IC 3 gebildeten Schmitt-Trigger-Komparators 10 mit der Spannung BWS verglichen. Erreichen beide Spannungen den gleichen Wert, so wird ein Transistor geschaltet und somit die Bremsflüssigkeitswarnlampe BWL betätigt. Das Aufleuchten der Warnlampe BWL erfolgt somit erfindungsgemäß nicht direkt bei Anliegen einer Spannung BWS, sondern verzögert.

Die Ansprechzeit des Zeitgliedes 8 ist abhängig von den verwendeten elektronischen Bauteilen und kann somit variiert werden. Erfindungsgemäß hat es sich aber als besonders vorteilhaft erwiesen, daß die Ansprechzeit etwa zwischen 5 und 20 s liegt. Damit werden Zustände, bei denen das Flüssigkeitsniveau nur kurzfristig absinkt, nicht registriert. Andererseits kann aber auch ein Ausfall der Bremsanlage aufgrund fehlender Flüssigkeit rechtzeitig gemeldet werden.

### Bezugszeichenliste

- 1: Verschraubung
- 2: Behälterwarneinrichtung
- 3: Schwimmer
- 4: Gehäuse
- 5: Kontakte
- 6: Steckerteil
- 7: Kontaktstifte
- 8: Zeitglied
- 9: RC-Glied
- 10: Schmitt-Trigger-Komparator

- BWL: Bremsflüssigkeitswarnlampe
- BWS: Von der Behälterwarneinrichtung gelieferte Spannung
- C: Kondensator
- IC: integrierte Schaltkreise
- R: Widerstände
- T: Transistor

## Patentansprüche

1. Ausgleichsbehälter für eine hydraulische Bremsanlage mit einer Behälterwarneinrichtung (2), welche zumindest einen Schwimmer (3) zur Sensierung einer Bremsflüssigkeitsoberfläche und ferner einen Schaltkreis mit einem Zeitglied (8) aufweist, **dadurch gekennzeichnet, daß** das Zeitglied (8) unmittelbar an einem Bauteil des Ausgleichsbehälters oder mittelbar an einem Bauteil des Ausgleichsbehälters mittels einem Steckerteil (6) oder Adapter angeordnet ist.

2. Ausgleichsbehälter nach Anspruch 1, **dadurch gekennzeichnet, daß** das Zeitglied (8) im Ausgleichsbehäter integriert ist.

3. Ausgleichsbehäter nach Anspruch 2, **dadurch gekennzeichnet, daß** das Zeitglied (8) in einer Verschraubung (1) des Ausgleichsbehälters integriert ist.

4. Ausgleichsbehälter nach einem der vorhergehenden Ansprüche, **dadurch gekennzeichnet, daß** das Zeitglied (8) vorzugsweise eine Ansprechzeit von etwa 5 bis 20 s aufweist.

5. Ausgleichsbehälter nach einem der vorhergehenden Ansprüche, **dadurch gekennzeichnet, daß** das Zeitglied (8) zumindest ein RC-Glied (9) und einen Schmitt-Trigger-Komparator (10) umfaßt.

## Claims

1. Reservoir for a hydraulic brake system with a reservoir warning device (2) that includes at least one float (3) for sensing a brake fluid surface and, further, a circuit with a time function element (8),
**characterized in that** the time function element (8) is arranged directly at a component of the reservoir or indirectly at a component of the reservoir by means of a plug part (6) or adapter.

2. Reservoir as claimed in claim 1,
**characterized in that** the time function element (8) is integrated in the reservoir.

3. Reservoir as claimed in claim 2,
**characterized in that** the time function element (8) is integrated in a screw coupling (1) of the reservoir.

4. Reservoir as claimed in any one of the preceding claims,
**characterized in that** the time function element (8) preferably has a reaction time of roughly 5 to 20 seconds.

5. Reservoir as claimed in any one of the preceding claims,
**characterized in that** the time function element (8) comprises at least one RC network (9) and a Schmitt-trigger comparator (10).

## Revendications

1. Réservoir de compensation pour un système de freinage hydraulique, avec un dispositif d'avertissement (2) du réservoir qui comporte au moins un flotteur (3) pour détecter une surface de liquide de freinage ainsi qu'un circuit de commande avec un temporisateur (8), **caractérisé en ce que** le temporisateur (8) est placé directement sur un composant du réservoir de compensation ou indirectement sur un composant du réservoir de compensation, au moyen d'un connecteur (6) ou adaptateur.

2. Réservoir de compensation selon la revendication 1, **caractérisé en ce que** le temporisateur (8) est intégré au réservoir de compensation.

3. Réservoir de compensation selon la revendication 2, **caractérisé en ce que** le temporisateur (8) est intégré à un vissage (1) du réservoir de compensation.

4. Réservoir de compensation selon l'une des revendications précédentes, **caractérisé en ce que** le temporisateur (8) présente de préférence un temps de réponse d'environ 5 à 20 sec.

5. Réservoir de compensation selon l'une des revendications précédentes, **caractérisé en ce que** le temporisateur (8) comprend au moins un élément RC (9) et un comparateur à bascule de Schmitt (10).
